# EUROPEAN PATENT SPECIFICATION

(11) **EP 2 977 517 B1**
(45) Date of publication and mention of the grant of the patent: **10.07.2019**
(21) Application number: 15178318.0
(22) Date of filing: 24.07.2015
(51) Int. Cl.: E04B 1/00

(54) **CONSTRUCTION ELEMENT**
KONSTRUKTIONSELEMENT
ÉLEMENT DE CONSTRUCTION

(30) Priority: 25.07.2014 DK 201400416
(43) Date of publication of application: 27.01.2016
(73) Proprietor: Krsgaard Invest ApS, 8800 Viborg (DK)
(72) Inventor: Kærsgaard, Bent, 8800 Viborg (DK)
(74) Representative: Rottenberg, Annabell Simone

(56) References cited:
- DE-U1- 9 219 027
- DE-U1- 29 920 081
- FR-A1- 2 954 370

## Description

### Field of invention

The present invention relates to a self-supporting construction for balconies, landings, platforms and canopies for outdoor use. More particularly, the present invention relates to a self-supporting construction, which is fire-resistant and facilitates drainage.

### Background of the invention

During installation of supporting constructions like e.g. balconies on a building facade, it is required to divert rain water in an environmentally correct manner so that the water is not an inconvenience to people located under the self-supporting construction.

It is i.a. well-known to mount gutters on supporting constructions like balconies and to use these gutters for drainage of rain water collected by the supporting construction (e.g. the balcony). Mounting of gutters is only a usable solution for inclined supporting constructions which leaves an unintended visual impression. Using gutters for drainage is therefore not a possible solution for all balcony constructions.

DE29920081 U1 describes a modular balcony, which is easy to transport, since it consists of modules that are assembled during the mounting. The balcony is equipped with a gutter for collection of rain water. The gutter extends along the two longest sides of the balcony. It is not possible to mount drains on any other place than the balcony's two longest sides. This leads to problems when it is desirable to mount drains on other places than the balcony's two longest sides.

Thus, there is a need for supporting constructions like balconies, which enable and ensure a desired drainage, preferably with the option of a custom placement of the water drain.

In balcony constructions and other bearing constructions, it is well known to use specially designed materials to achieve a fire-resistant effect. Some manufacturers use sandwich constructions consisting of metallic outer plates surrounding a fire-resistant inner lining. These constructions, however, are expensive and time consuming to mount, since they are typically mounted subsequently by mechanical fastening using screws.

Therefore, it is desirable to provide a construction element consisting of one construction only, which is self-supporting, fire-resistant, moisture ventilated and at the same time faster to mount than the self-supporting constructions elements known until now, including balconies.

DE 9219027 U1 discloses a balcony having a load-bearing structure.

The balcony comprises aluminium load-bearing profile having a plurality of closed rectangular channels. This document discloses the features of the preamble of claim 1. FR 2954370 A1 discloses a balcony having a load-bearing structure provided with a profile having a closed channel.

Accordingly, it would desirable to provide a construction element that is less complicated and expensive.

### The object of the invention

The object of the present invention is to present a construction element, which enables and ensures a desired drainage with the option of custom placement of the drain.

Furthermore, it is an object of the present invention to present a construction element consisting of one construction only, which is self-supporting, fire-resistant and at the same time faster to mount than the self-supporting construction known until now, including balconies.

it is an object of the invention to provide a construction element that is less complicated and expensive.

The object of the present invention is achieved by a self-supporting construction element as defined in claim 1. Preferred embodiments are defined in the sub-claims, explained in the following description and illustrated in the accompanying figures.

The self-supporting construction element, according to the invention, is a self-supporting construction element comprising:
- a frame, comprising two first side members the ends of which are connected by one or more additional side members forming the peripheral boundary of the self-supporting construction element, and which frame comprises a gutter for collection of rain water extending at least around a part of the frame,
- a stepping surface attached to the frame,
- one or more box elements configured to collect and drain water into the gutter, wherein the gutter extends along at least one additional side member, wherein the first side members are shaped as a folded plate and have an upper part shaped as a folded edge and a lower part shaped as said gutter having a cavity, a gutter wall and a folded plate member.

Hereby, it is possible to provide a construction element that is less complicated and expensive. It is further possible to provide a self-supporting construction element, e.g. a balcony, which makes it possible to ensure a desired drainage and a practically unlimited custom placement of the drain. A great flexibility is thereby achieved regarding the placement of the drain.

It may be an advantage that the frame comprises two long side members the ends of which are connected by two short side members forming the peripheral boundary of the self-supporting construction element, wherein the gutter extends along at least the one short side member.

The self-supporting construction can be used for balconies, landings, platforms and canopies for outdoor use.

The frame can be rectangular or have any other desired geometrical shape as for example hexagonal or shaped as a semicircle.

The frame could preferably comprise a number of side members, which could be linear or arched depending on the intended form of the frame.

The self-supporting construction element comprises a stepping surface attached to the frame. The stepping surface could for example be wood boards, one or more gratings, tiles or one or more plates. "Attached to" covers the term "arranged to abut". The stepping surface can e.g. be attached to the frame by being arranged in the frame - i.e. without using screws or mountings.

The self-supporting construction element comprises one or more elements for collection and drainage of water. These elements may comprise a horizontally oriented surface for collection and drainage of rain water. A number of sides may preferably be provided on the horizontally oriented surface.

The elements for collection and drainage of water could preferably at the same time function as supporting elements for the horizontally oriented stepping surface arranged above the elements.

The stepping surface could be executed as terrace boards (by wood or composite materials, including plastic materials, possibly fibre-reinforced or terazzo), fibre concrete, roofing felt, grid structure, tiles or other types of plates.

The self-supporting construction element comprises a gutter for collection of rain water. The gutter may have any usable form as long as the gutter is configured to receive and contain water. The gutter may e.g. be made from galvanized steel, stainless steel or aluminium.

The gutter extends along at least one part of the frame.

The gutter could preferably be part of the frame so that there is no need for a separate frame element and a separate gutter element. Thereby, the number of parts of the self-supporting construction element is reduced.

The self-supporting construction element comprises elements for collection and transport of rain water to the gutter. Accordingly, it is possible to drain all water by means of the gutter.

The self-supporting construction element may comprise a gutter in one piece or several separate gutters, which could be in fluid communication with each other.

The frame may comprise two long side members that in the end are connected by two short side members. The frame may preferably be rectangular.

If may be an advantage if the self-supporting construction element comprises a number of box elements attached to the frame, where each box element comprises one basically plane bottom plate and a first side element and another side element attached to the bottom plate.

This would result in a self-supporting construction element, which is easy to mount and produce. It is also possible to clean the gutter and drain pipe (drain nozzle) after moving the stepping surface of the construction.

The attachment could preferably be made without mountings, fittings, screws or other mechanical attachment means requiring manual handling. The attachment could be made by merely placing the box elements inside the frame.

Each box element may preferably be constructed as a folded profile (in any desired height) made from aluminium, galvanized steel or stainless steel. The box elements could possibly be painted or varnished.

The box elements may preferably be supported by the gutter when attached to the frame.

It may be an advantage if the first side element is plate shaped and extends basically perpendicularly to the bottom plate, and that the other side element is plate shaped and extends basically perpendicularly to the bottom plate.

Hereby, a simple element, which may be produced as a folded plate can be achieved. Such a construction also makes it possible to ventilate the cavity under the stepping surface thereby extending the longevity of the stepping surface.

It may be beneficial that the box elements are detachably attached to the frame.

Hereby, it is possible to provide a fast and simple mounting of the self-supporting construction element. Furthermore, it is possible to perform service in a fast and simple manner. It is financially beneficial that the box elements can be replaced individually in case of damage or in connection with any desired design changes.

It may be beneficial if the bottom plates of the box elements constitute at least one part of the bottom of the self-supporting construction.

Thereby it is possible to provide a simple and easy-to-mount balcony. Furthermore, a faster mounting could significantly reduce the total amount of time spent on the project.

It may be beneficial if the bottom plates of the box elements make up most of the bottom of the self-supporting construction element.

It could be beneficial if the box elements form support for the stepping surface when the box elements are arranged inside the frame (e.g. attached to the frame).

Hereby it becomes possible to provide a self-supporting construction element (e.g. a balcony) where it is possible to quickly and easily to attach or replace a new stepping surface.

It may be beneficial if the gutter is horizontally oriented and extends along at least a part of the periphery of the frame.

This ensures that the drain can be placed anywhere along the entire gutter.

It may be beneficial that the gutter extends along at least a part of the periphery of the frame.

It may be beneficial if the gutter extends along the whole periphery of the frame.

It may be beneficial that at least one overflow opening is provided in the frame in a place that enables a controlled overflow and inspection of the overflow opening.

It may be beneficial that at least one overflow opening in which a profile element is mounted is arranged in the gutter.

This makes it possible to simultaneously providing a security drain and a profile element for mounting purposes.

The profile element could for instance be used for fixing the frame to a wall bracket.

The overflow opening may have any suitable shape. It may for example be rectangular, circular or oval.

Plate elements may be provided between the bottom of the side member and the lowest part of the profile element.

It may be beneficial that the box elements are made of fire-resistant material, preferably aluminium or another lightweight metal or fire-resistant material.

Hereby is obtained a self-supporting construction element, which is fire-resistant and at the same time faster to mount than the self-supporting construction elements known so far.

It may be beneficial to provide a number of support elements are extending between the opposite side members of the frame.

Hereby it is possible to reinforce and support the frame and thereby provide a more sturdy and torsion resistant self-supporting construction element.

The support elements may preferably extend perpendicularly to the opposite side members of the frame. This is the preferred solution when the frame is rectangular.

It may be beneficial to provide a sealing structure (e.g. a sealing plate) between the frame and the stepping surface so that any noise caused by mechanical interaction (when walking on the construction element) between the frame and the stepping surface can be prevented and reduced. It may be beneficial that the sealing structure is a plate or a disc.

### Description of the drawings

The invention will below be explained with reference to the accompanying drawings where
- Fig. 1: shows a schematic illustration of a part of a construction element, according to the invention, seen diagonally from above,
- Fig. 2: shows a schematic illustration of a part of a construction element, according to the invention, seen diagonally from below,
- Fig. 3A: shows a schematic illustration of a part of a construction element, according to the invention, seen from the side,
- Fig. 3B: shows a close-up illustration of a box element shown in Fig. 3A) seen from the side,
- Fig. 4: shows a schematic cross-sectional illustration of a part of a construction element according to the invention,
- Fig. 5: shows a cross-sectional illustration of a construction element according to the invention,
- Fig. 6: shows a schematic cross-sectional illustration of a part of a construction element according to the invention and
- Fig. 7: shows a schematic cross-sectional illustration of a part of a construction element according to the invention, by and large corresponding to Fig. 4.

### Detailed description

It should be noted that the accompanying drawings only illustrate nonlimiting embodiments. A number of other embodiments will be possible within the scope of the present invention defined by the appended claims. In the following, corresponding or identical elements of the various embodiments will be indicated by the same reference term.

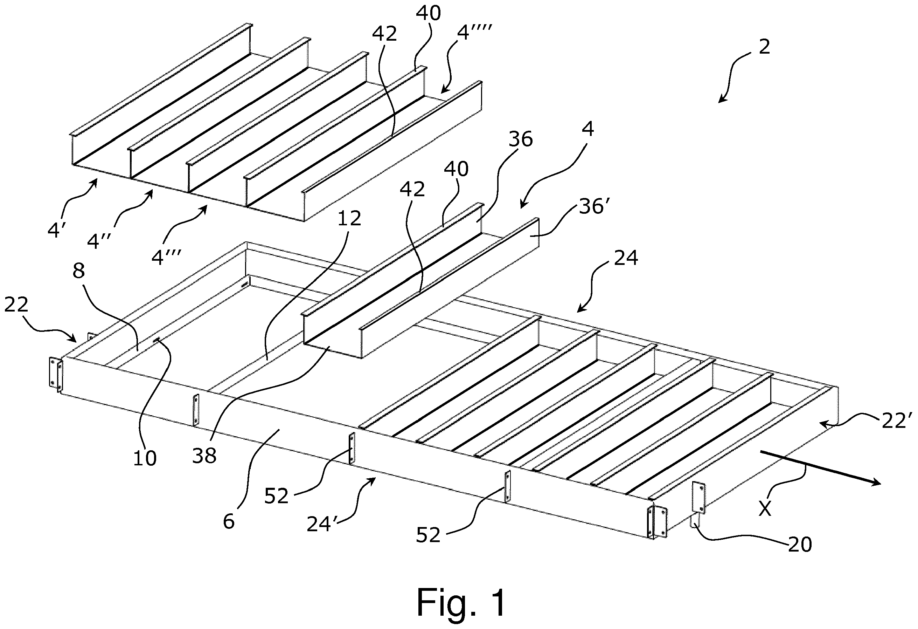

Fig. 1 shows a schematic illustration of a part of a construction element according to the invention. The construction element 2 comprises a rectangular frame 6 consisting of two parallel, short side members 22, 22' and two parallel, long side members 24, 24'. The side members 22, 22', 24, 24' are bevelled (45 degrees) and are welded together so that the frame 6 constitutes a one-piece body (a cohesive element). The frame 6 is symmetrical about the longitudinal axis X of the balcony.

Between the two long side members 24, 24' a number of supporting elements 12 are provided, designed as rods and extending parallel to the short side members 22, 22' and perpendicular to the longitudinal axis X of the balcony.

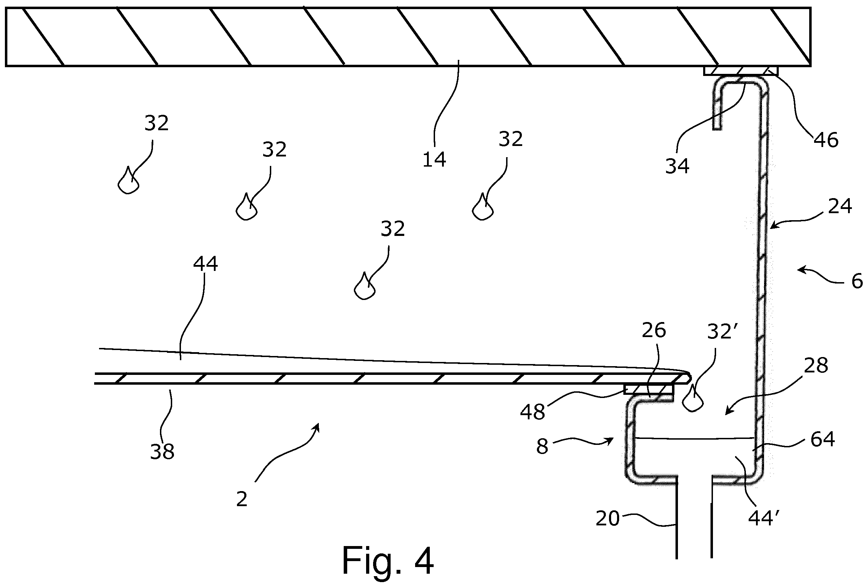

The construction element 2 comprises 10 box elements 4, 4', 4", 4"', 4"", configured to be attached to the frame 6. Along the inner lower edge of the frame extends a gutter wall 8 which comprises a bent plate member (see Fig. 4) which is configured to receive the lower side of one of the mentioned box elements 4, 4', 4", 4"'. The box elements 4, 4', 4", 4"' thus bear against the folded plate member when attached to the frame 6.

Each of the box elements 4, 4', 4", 4"' comprise a rectangular bottom plate 38 extending between two parallel side plates 36, 36', on which there is provided a first top edge 40 and a second top edge 42. The box elements 4, 4', 4", 4"' may be manufactured from a plate which can be folded.

Five box elements are attached to the frame 6 while the remaining box elements 4, 4', 4", 4"' are arranged above the frame 6.

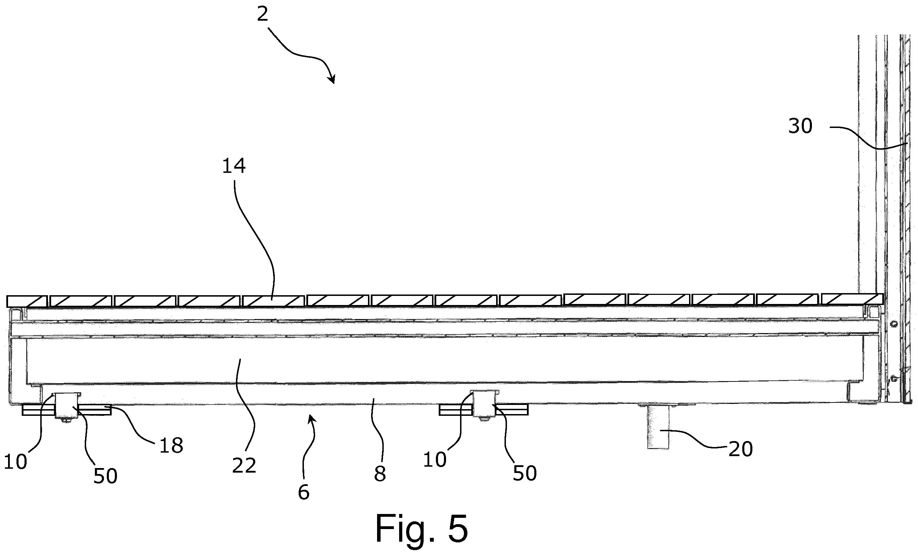

Even though it is not shown, it is intended to provide floor elements like e.g. boards (see Fig. 4 and Fig. 5) or plates on top of the box elements 4, 4', 4", 4"'. When it rains, the water hitting the floor elements of the balcony will be directed into the box elements 4, 4', 4", 4"' through the collections in the floor elements.

From the box elements 4, 4', 4", 4"', the water is directed into a gutter provided behind the gutter wall 8. The water from the entire balcony area is thus collected in the gutter provided behind the gutter wall 8 from which the water is drained through one or more drains 20.

This way, it is possible to design a construction element 2, which enables and ensures a custom placement of the drain 20.

A number of mountings 52 are fixed along the frame 6. The mountings 52 are configured for mounting of balusters (not shown) for mounting of a guard rail (see Fig. 5).

By using box elements 4, 4', 4", 4"' made from aluminium, it is possible to provide a construction element which is fire resistant and light. It is possible to make box elements 4, 4', 4", 4"' from other materials, e.g. steel.

Since the construction element 2 comprises a frame 6 and a number of identical box elements 4, 4', 4", 4"', it is possible to prefabricate the construction element 2 and ensure fast assembly.

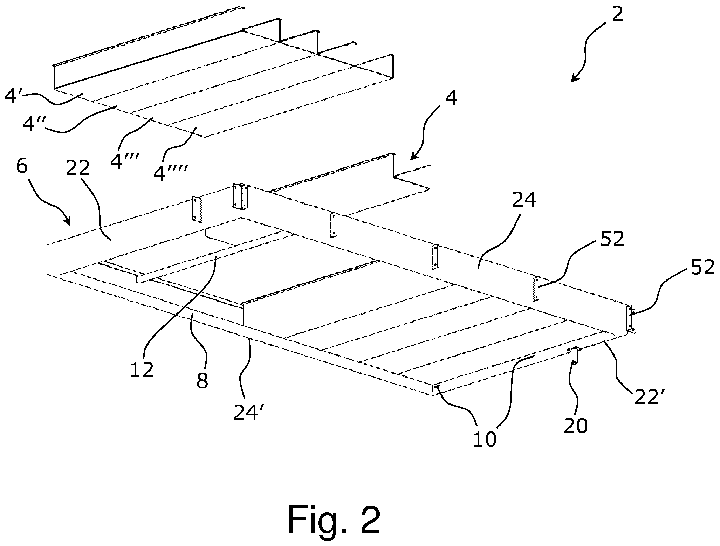

Fig. 2 illustrates a schematic illustration of a part of the balcony 2 shown in Fig. 1, seen diagonally from below. The construction element 2 comprises a frame 6 consisting of two opposite long, parallel side members 24, 24' connected by two opposite short, parallel side members 22, 22'.

Between the two long side members 24, 24' are provided a number of supporting members 12, constructed as rods and extending parallel with the short side members 22, 22' and extending diagonally on the long side members 24, 24'.

It can be seen that the frame 6 comprises a gutter wall 8 extending along the lowest part of the inner side of the frame 6. Five identical box elements 4, 4', 4", 4"' are attached to the frame 6 in such a way that the box elements 4, 4', 4", 4"' bear against the gutter wall 8 while at the same time water from the box elements 4, 4', 4", 4"' may be drained into the cavity (gutter) provided behind the gutter wall 8.

A drain pipe 20 is provided in the one short side member 22'. Furthermore, overflow openings 10 are provided inside the gutter wall 8. These overflow openings ensure that the gutter (not shown) provided behind the gutter wall 8 is emptied of water, in case the water level in the gutter provided behind the gutter wall 8 rises to a level corresponding to the placement of the overflow openings 10.

A number of mountings 52 are provided along the side members 22, 22', 24, 24' of the frame. The mountings 52 are constructed for mounting of balusters on which a guard rail may be fixed (see Fig. 5).

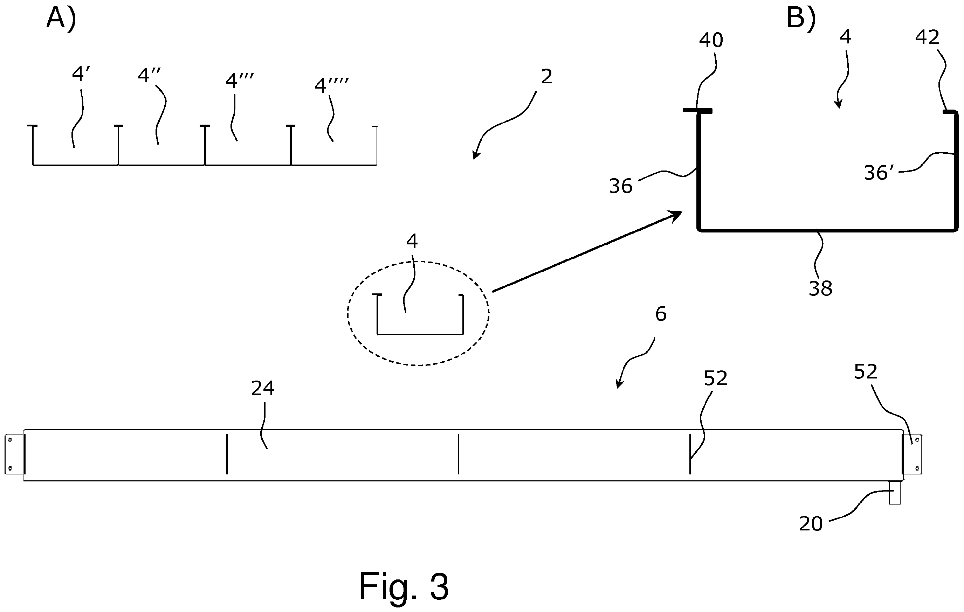

Fig. 3A) illustrates a schematic illustration of a part of a construction element 2 according to the invention seen from the side. The construction element 2 comprises a frame 6 with a side member 24. A number of box elements 4, 4', 4", 4"' which have not yet been attached to the frame 6 are illustrated above the frame 6. A number of mountings 52 are fixed along the side member 24 of the frame and the adjacent side members.

On Fig. 3 B) is shown a close-up illustration of the box element 4 shown in Fig. 3 A). Each box element 4, 4', 4", 4"', 4"" in Fig. 3 A) comprises a first side plate 36, a second side plate 36' and a bottom plate 38 as shown in Fig. 3 B). A first top edge 40 is provided on the first site plate 36 and a second top edge 42 on the second side plate 36'. It can be seen that the first top edge 40 is designed to bear against another top edge 42 from an adjacent box element.

Fig. 4 shows a schematic cross-sectional illustration of a part of a construction element 2 according to the invention. It can be seen that the construction element 2 comprises a frame 6 consisting of a side member 24 having an upper part shaped as a folded edge 34 and a lower part shaped as a gutter 64 with a cavity 28 surrounded by a gutter wall 8 and a folded plate member 26 which constitutes the contact surface for a bottom plate 38 from a box element (see Fig. 1 or Fig. 2) attached to the frame 6. There is provided a plate 48 between the folded plate member 26 and the bottom plate 38 (e.g. made from rubber or neoprene) for the purpose of reducing noise arising as a consequence of mechanical contact between the folded plate member 26 and the bottom plate 38 and noise generated between the stepping surface 14 and the box elements.

A stepping surface 14 shaped as a wood deck (wood boards) is supported by the folded edge 34. However, a plate (sealing structure) 46 is placed between the stepping surface 14 and the folded edge 34. In may be beneficial if the plate 46 is designed to reduce the noise which arises as a result of impact on the stepping surface 14 (when someone walks on the stepping surface 14). The plate 46 can e.g. be made from rubber or neoprene.

Drops of water 32 drip from the stepping surface 14 onto the bottom plate 38 where the drops of water 32 are collected and form a layer of water 44. The water 44 is drained into the cavity 28 provided in the lower part of the side member 24. It can be seen that a drop 32 drips into a water layer 44' in the lowest part of the cavity 28. From the cavity 28 the water 44' is drained by a drain pipe 20 provided at the bottom of the side member 24. The drain pipe 20 can be fixed to the side member 24 in different ways, including i.a. mechanical fixing by means of screws or by welding.

With a construction element 2 according to the invention, it is possible to provide a controllable draining of the construction element 2. Furthermore, great freedom regarding the positioning of the drain pipe is achieved. In principle, the drain pipe 20 could be placed anywhere along the lower part of the frame 6 of the balcony.

Fig. 5 illustrates a cross-sectional illustration of a balcony 2 according to the invention. The construction element 2 comprises a frame 6 with a side member 22 comprising a gutter wall 8 and a cavity/gutter (not shown) placed behind the gutter wall 8. A drain pipe 20 is mounted in the right side of the side member 22.

Wood boards 14 are mounted on the upper side of the frame 6 while a glass guard rail 30 is mounted around the one long side of the balcony.

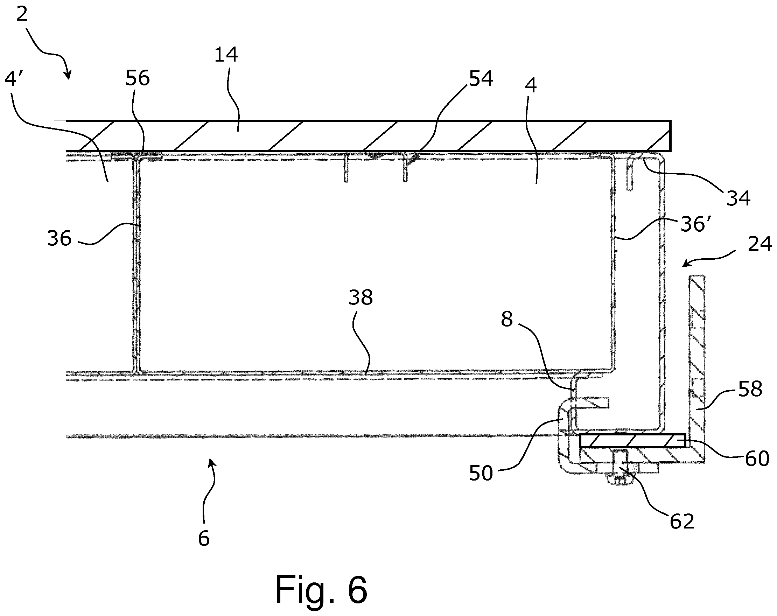

A security drain is provided in the form of overflow openings 10 two places in the gutter wall 8. At each of the overflow openings 10, a profile element 50 is attached, which can be used for fixing of the frame 6 to a wall bracket (see Fig. 6). Plate elements 18 are provided between the bottom of the side member 22 and the lowest part of the profile element 50.

Fig. 6 shows a schematic cross-sectional illustration of a part of a construction element 2 according to the invention. The construction element 2 comprises a frame 6 comprising a side member 24 shaped as a folded plate. The side member 24 comprises a folded edge 34 provided in the upper end of the side member 24. The side member 24 includes a gutter wall 8 in the distal end of which there is provided a folded end member 26 which a box element 4 bears against.

The balcony includes a number of box elements 4, 4' bearing against the side members 24 of the frame. Each box element 4, 4' comprises a first side plate 36, a second side plate 36' and a bottom plate 38.

A stepping surface 14 (formed as wood boards) is provided on top of the box elements 4, 4'. The stepping surface 14 is placed against a sealing shaped as a plate from a flexible material placed on the upper side of the distal end of the first side plate 36 and the other side plate 36' respectively.

A U-rail 54 is provided on the underside of the stepping surface 14. The U-rail 54 can be used for correct positioning of the stepping surface 14 e.g. during mounting on an underlying attachment element (e.g. the support element 12 indicated on Fig. 1 and Fig. 2).

An overflow opening is provided in the gutter wall 8. Through the overflow opening in the gutter wall 8 is fixed a U-shaped profile element 50, which is fixed to the side member 24 by a bolt 62. A plate 60 and an angle bracket 58 are provided respectively between the U-shaped profile element 50 and the underside of the side member 24. The angle bracket 58 can be used for fixation of the construction element 2 directly or indirectly to a wall (e.g. by fixation to a vertically oriented metal beam fixed on an apartment building).

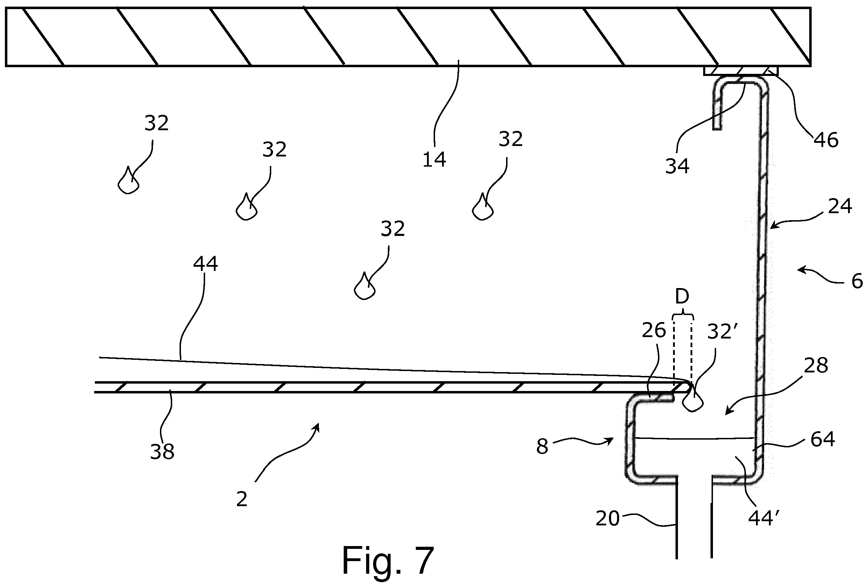

Fig. 7 shows a schematic cross-sectional illustration of a part of a construction element 2 according to the invention. Fig. 7 basically corresponds to Fig. 4. On Fig. 7, however, a plate 48 is not arranged between the folded plate member 26 and the bottom plate 38. On the other hand, the distance D between the distal end of the bottom plate 38 and the distal end of the plate member 26, on which the bottom plate 38 bears against, is indicated.

It is important that distance D is bigger than zero so that water 44 from the bottom plate 38 drips into the gutter 64.

### List of reference numerals

- 2: Self-supporting construction element (e.g. a balcony)
- 4, 4', 4", 4"', 4"": Box element
- 6: Frame
- 8, 8': Gutter wall
- 10: Overflow opening
- 12: Support element
- 14: Stepping surface
- 16: Profile element
- 18: Plate element
- 20: Drain pipe
- 22, 22', 24, 24': Side member
- 26: Folded plate member
- 28: Cavity
- 30: Guard rail
- X: Longitudinal axis
- 32, 32': Drop
- 34: Folded edge
- 36, 36': Side plate
- 38: Bottom plate
- 40, 42: Top edge
- 44, 44': Water
- 46, 48: Plate
- 50: Profile element
- 52: Mounting
- 54: U-rail
- 58: Angle bracket
- 60: Plate
- 62: Bolt
- 64: Gutter
- D: Distance

## Claims

1. Self-supporting construction element (2) comprising:
- a frame (6), comprising two first side members (24, 24') the ends of which are connected by one or more additional side members (22, 22') forming the peripheral boundary of the self-supporting construction element (2), which frame (6) comprises a gutter (64) for collection of rain water (44, 44'), and extending along at least a part of the frame (6),
- a stepping surface (14) attached to the frame (6),
- one or more box elements (4, 4', 4", 4"', 4"") configured to collect and drain water (44, 44') to the gutter (64), wherein the gutter (64) extends along at least the one additional side member (22'), **characterised in that** the first side members (24, 24') are shaped as a folded plate and have an upper part shaped as a folded edge (34), and a lower part shaped as the gutter (64) having a cavity (28), a gutter wall (8) and a folded plate member (26).

2. Self-supporting construction element (2) according to claim 1, **characterised in that** the folded plate member (26) is a contact surface for a bottom plate (38) for the box element (4, 4', 4", 4"', 4"") attached to the frame (6), and **in that** a plate (46) is provided between the stepping surface (14) and the folded edge (34).

3. Self-supporting construction element (2) according to claim 1, **characterised in that** a plate (48) is provided between the folded plate member (26) and the bottom plate (38).

4. Self-supporting construction element (2) according to any one of the preceding claims, **characterised in, that** the frame (6) comprises two long side members (24, 24') the ends of which are connected by two short side members (22, 22') forming the peripheral boundary of the self-supporting construction element (2), wherein the gutter (64) extends along at least one short side member (22').

5. Self-supporting construction element (2) according to any one of the preceding claims, **characterised in, that** the first side element (36) is plate shaped and extends essentially perpendicularly to the bottom plate (38) and that the second side element (36') is plate formed and extends essentially perpendicularly to the bottom plate (38).

6. Self-supporting construction element (2) according to any one of the preceding claims, **characterised in, that** the box elements (4, 4', 4", 4"', 4"") are detachably attached to the frame (6).

7. Self-supporting construction element (2) according to one of the preceding claims, **characterised in, that** the bottom plates (38) of the box elements (4, 4', 4", 4"', 4"") comprise at least a part of the bottom of the self-supporting construction element (2).

8. Self-supporting construction element (2) according to any one of the preceding claims, **characterised in, that** the box elements (4, 4', 4", 4"', 4"") form support for the stepping surface (14), when the box elements (4, 4', 4", 4"', 4"") are arranged inside the frame (6).

9. Self-supporting construction element (2) according to any one of the preceding claims, **characterised in, that** the gutter (64) extends horizontally and extends along at least a part of the periphery of the frame (6).

10. Self-supporting construction element (2) according to any one of the preceding claims, **characterised in, that** at least one overflow opening (10) in which a profile element (50) is arranged is provided in the gutter (64).

11. Self-supporting construction element (2) according to any one of the preceding claims, **characterised in, that** the box elements (4, 4', 4", 4"', 4"") are made in a fire resistant material, preferably aluminium.

12. Self-supporting construction element (2) according to any one of the preceding claims, **characterised in, that** a number of support elements (12) are extending between the opposite side members (24, 24') of the frame (6).

## Patentansprüche

1. Selbsttragendes Bauelement (2), umfassend:
- einen Rahmen (6), der zwei erste Seitenelemente (24, 24') umfasst, deren Enden durch ein oder mehrere zusätzliche Seitenelemente (22, 22') verbunden sind, die die Umfangsbegrenzung des selbsttragenden Bauelements (2) bilden, dessen Rahmen (6) eine Rinne (64) zum Sammeln von Regenwasser (44, 44') umfasst und die sich entlang mindestens eines Teils des Rahmens (6) erstreckt,
- eine Trittfläche (14), die an dem Rahmen (6) befestigt ist,
- ein oder mehrere Gehäuseelemente (4, 4', 4", 4"', 4""), die konfiguriert sind, um Wasser (44, 44') zu sammeln und zu der Rinne (64) abzulassen, wobei sich die Rinne (64) entlang mindestens des einen zusätzlichen Seitenelements (22') erstreckt, **dadurch gekennzeichnet, dass** die ersten Seitenelemente (24, 24') wie eine gefaltete Platte geformt sind und einen oberen Teil, der wie eine gefaltete Kante (34) geformt ist, und einen unteren Teil haben, der wie eine Rinne (64) geformt ist, die einen Hohlraum (28), eine Rinnenwand (8) und ein gefaltetes Plattenelement (26) hat.

2. Selbsttragendes Bauelement (2) nach Anspruch 1, **dadurch gekennzeichnet, dass** das gefaltete Plattenelement (26) eine Kontaktfläche für eine Bodenplatte (38) für das Gehäuseelement (4, 4', 4", 4"', 4"") ist, das an dem Rahmen (6) befestigt ist, und dass eine Platte (46) zwischen der Trittfläche (14) und der gefalteten Kante (34) bereitgestellt ist.

3. Selbsttragendes Bauelement (2) nach Anspruch 1, **dadurch gekennzeichnet, dass** eine Platte (48) zwischen dem gefalteten Plattenelement (26) und der Bodenplatte (38) bereitgestellt ist.

4. Selbsttragendes Bauelement (2) nach einem der vorhergehenden Ansprüche, **dadurch gekennzeichnet, dass** der Rahmen (6) zwei lange Seitenelemente (24, 24') umfasst, deren Enden durch zwei kurze Seitenelemente (22, 22') verbunden sind, die die Umfangsbegrenzung des selbsttragenden Bauelements (2) bilden, wobei sich die Rinne (64) entlang mindestens eines kurzen Seitenelements (22') erstreckt.

5. Selbsttragendes Bauelement (2) nach einem der vorhergehenden Ansprüche, **dadurch gekennzeichnet, dass** das erste Seitenelement (36) plattenförmig ist und sich im Wesentlichen senkrecht zu der Bodenplatte (38) erstreckt und dass das zweite Seitenelement (36') plattenförmig ist und sich im Wesentlichen senkrecht zu der Bodenplatte (38) erstreckt.

6. Selbsttragendes Bauelement (2) nach einem der vorhergehenden Ansprüche, **dadurch gekennzeichnet, dass** die Gehäuseelemente (4, 4', 4", 4"', 4"") entfernbar an dem Rahmen (6) befestigt sind.

7. Selbsttragendes Bauelement (2) nach einem der vorhergehenden Ansprüche, **dadurch gekennzeichnet, dass** die Bodenplatten (38) der Gehäuseelemente (4, 4', 4", 4"', 4"") mindestens einen Teil des Bodens des selbsttragenden Bauelements (2) umfassen.

8. Selbsttragendes Bauelement (2) nach einem der vorhergehenden Ansprüche, **dadurch gekennzeichnet, dass** die Gehäuseelemente (4, 4', 4", 4"', 4"") eine Stütze für die Trittfläche (14) bilden, wenn die Gehäuseelemente (4, 4', 4", 4"', 4"") in dem Rahmen (6) angeordnet sind.

9. Selbsttragendes Bauelement (2) nach einem der vorhergehenden Ansprüche, **dadurch gekennzeichnet, dass** sich die Rinne (64) horizontal erstreckt und sich entlang mindestens eines Teils des Umfangs des Rahmens (6) erstreckt.

10. Selbsttragendes Bauelement (2) nach einem der vorhergehenden Ansprüche, **dadurch gekennzeichnet, dass** mindestens eine Überlauföffnung (10), in der ein Profilelement (50) angeordnet ist, in der Rinne (64) bereitgestellt ist.

11. Selbsttragendes Bauelement (2) nach einem der vorhergehenden Ansprüche, **dadurch gekennzeichnet, dass** die Gehäuseelemente (4, 4', 4", 4"', 4"") aus einem feuerbeständigen Material hergestellt sind, bevorzugt aus Aluminium.

12. Selbsttragendes Bauelement (2) nach einem der vorhergehenden Ansprüche, **dadurch gekennzeichnet, dass** sich mehrere Stützelemente (12) zwischen den gegenüberliegenden Seitenelementen (24, 24') des Rahmens (6) erstrecken.

## Revendications

1. Élément de construction autoporteur (2), comprenant :
- un cadre (6), comprenant deux premiers organes latéraux (24, 24') dont les extrémités sont raccordées par un ou plusieurs organes latéraux supplémentaires (22, 22') formant la limite périphérique de l'élément de construction autoporteur (2), lequel cadre (6) comprend une gouttière (64) pour la collecte d'eau de pluie (44, 44'), et s'étendant le long d'au moins une partie du cadre (6),
- une surface de marche (14) attachée au cadre (6),
- un ou plusieurs éléments en boîte (4, 4', 4", 4"', 4"") configurés pour collecter et drainer de l'eau (44, 44') jusqu'à la gouttière (64), dans lequel la gouttière (64) s'étend le long d'au moins l'un organe latéral supplémentaire (22'), **caractérisé en ce que** les premiers organes latéraux (24, 24') sont sous forme de plaque pliée et ont une partie supérieure sous forme de bord plié (34), et une partie inférieure sous forme de gouttière (64) ayant une cavité (28), une paroi de gouttière (8) et un organe en plaque pliée (26).

2. Élément de construction autoporteur (2) selon la revendication 1, **caractérisé en ce que** l'organe en plaque pliée (26) est une surface de contact pour une plaque inférieure (38) pour l'élément en boîte (4, 4', 4", 4"', 4"") attaché au cadre (6), et **en ce qu'**une plaque (46) est prévue entre la surface de marche (14) et le bord plié (34).

3. Élément de construction autoporteur (2) selon la revendication 1, **caractérisé en ce qu'**une plaque (48) est prévue entre l'organe en plaque pliée (26) et la plaque inférieure (38).

4. Élément de construction autoporteur (2) selon l'une quelconque des revendications précédentes, **caractérisé en ce que** le cadre (6) comprend deux organes latéraux longs (24, 24') dont les extrémités sont raccordées par deux organes latéraux courts (22, 22') formant la limite périphérique de l'élément de construction autoporteur (2), dans lequel la gouttière (64) s'étend le long d'au moins un organe latéral court (22').

5. Élément de construction autoporteur (2) selon l'une quelconque des revendications précédentes, **caractérisé en ce que** le premier élément latéral (36) est en forme de plaque et s'étend essentiellement perpendiculairement à la plaque inférieure (38) et que le second élément latéral (36') est en forme de plaque et s'étend essentiellement perpendiculairement à la plaque inférieure (38).

6. Élément de construction autoporteur (2) selon l'une quelconque des revendications précédentes, **caractérisé en ce que** les éléments en boîte (4, 4', 4", 4"', 4"") sont attachés de façon détachable au cadre (6).

7. Élément de construction autoporteur (2) selon une des revendications précédentes, **caractérisé en ce que** les plaques inférieures (38) des éléments en boîte (4, 4', 4", 4"', 4"") comprennent au moins une partie du fond de l'élément de construction autoporteur (2).

8. Élément de construction autoporteur (2) selon l'une quelconque des revendications précédentes, **caractérisé en ce que** les éléments en boîte (4, 4', 4", 4"', 4"") forment un support pour la surface de marche (14), lorsque les éléments en boîte (4, 4', 4", 4"', 4"") sont agencés à l'intérieur du cadre (6).

9. Élément de construction autoporteur (2) selon l'une quelconque des revendications précédentes, **caractérisé en ce que** la gouttière (64) s'étend horizontalement et s'étend le long d'au moins une partie de la périphérie du cadre (6).

10. Élément de construction autoporteur (2) selon l'une quelconque des revendications précédentes, **caractérisé en ce qu'**au moins une ouverture de trop-plein (10), dans laquelle un élément profilé (50) est agencé, est prévue dans la gouttière (64).

11. Élément de construction autoporteur (2) selon l'une quelconque des revendications précédentes, **caractérisé en ce que** les éléments en boîte (4, 4', 4", 4"', 4"") sont faits en un matériau résistant au feu, de préférence de l'aluminium.

12. Élément de construction autoporteur (2) selon l'une quelconque des revendications précédentes, **caractérisé en ce qu'**un nombre d'éléments de support (12) s'étendent entre les organes latéraux opposés (24, 24') du cadre (6).
